# EUROPEAN PATENT SPECIFICATION

(11) **EP 3 960 276 B1**
(45) Date of publication and mention of the grant of the patent: **18.02.2026**
(21) Application number: 20794455.4
(22) Date of filing: 20.04.2020
(51) Int. Cl.: B01D 53/18, B01D 53/50, B01D 53/78

(54) **EXHAUST GAS INLET STRUCTURE OF ABSORPTION COLUMN**
ABGASEINTRITTSSTRUKTUR EINER ABSORPTIONSKOLONNE
STRUCTURE D'ENTRÉE DE GAZ D'ÉCHAPPEMENT DE COLONNE D'ABSORPTION

(30) Priority: 24.04.2019 JP 2019083196
(43) Date of publication of application: 02.03.2022
(73) Proprietor: Mitsubishi Heavy Industries, Ltd., Chiyoda-ku, Tokyo 1008332 (JP)
(72) Inventor: UEKAMI Akihiro, Yokohama-shi, Kanagawa 220-8401 (JP); KATAGAWA Atsushi, Yokohama-shi, Kanagawa 220-8401 (JP); IMADA Noriyuki, Yokohama-shi, Kanagawa 220-8401 (JP); OKURA Hajime, Yokohama-shi, Kanagawa 220-8401 (JP)
(74) Representative: Studio Torta S.p.A.
(86) International application number: PCT/JP2020/017054
(87) International publication number: WO 2020/218240

(56) References cited:
- JP-A- 2000 176 233
- JP-A- 2000 176 233
- JP-A- 2003 103 139
- JP-A- 2003 103 139
- JP-A- 2015 080 746
- JP-A- 2015 080 746
- JP-A- 2015 532 205
- JP-A- 2015 532 205
- JP-A- H 119 955
- JP-A- H11 156 152
- JP-A- H11 156 152
- US-A- 5 656 046

## Description

### TECHNICAL FIELD

The present invention relates to an exhaust gas inlet structure of an absorption column that absorbs and removes a predetermined substance in an exhaust gas.

### BACKGROUND ART

To prevent air pollution, wet limestone-gypsum flue gas desulfurization apparatuses have been widely in practical use as apparatuses to remove sulfur oxide in combustion exhaust gases. In these desulfurization apparatuses, an exhaust gas from a boiler or the like is introduced from an inlet flue into an absorption column and contacts an absorption liquid inside the absorption column, so that the sulfur oxide in the exhaust gas is absorbed and removed along with soot and dust and acid gases such as hydrogen chloride (HCl) and hydrogen fluoride (HF) in the exhaust gas.

The absorption liquid supplied into the absorption column enters the inlet flue when the exhaust gas is introduced from the inlet flue into the absorption column. A calcium compound in the absorption liquid having entered the inlet flue turns into gypsum scale by being attached to the bottom surface of the inlet flue and contacting the sulfur oxide in the exhaust gas. The gypsum scale thus generated is dried by the exhaust gas and the absorption liquid is attached onto the dried gypsum scale again. As this process is repeated, scaling on the bottom surface of the inlet flue progresses. As the scaling progresses, the gypsum scale narrows the exhaust gas flow path in the inlet flue, which increases the pressure drop in the inlet flue and increases the power of the fan for sending the exhaust gas from the inlet flue into the absorption column.

To suppress such scaling on an inlet flue, Patent Literature 1 discloses a technique in which the bottom surface of an inlet flue is formed in a protruding shape having inclined surfaces extending downward from the center toward opposite sides to thereby increase the gas flow speed at the bottom surface of the inlet flue.

### CITATION LIST

### PATENT LITERATURE

Patent Literature 1: Japanese Patent Application Publication No. 2015-80746

### SUMMARY OF INVENTION

### TECHNICAL PROBLEM

In the case where the bottom surface of an inlet flue is formed in a protruding shape having inclined surfaces extending downward from the center toward opposite sides, as with Patent Literature 1, the bottom surface of the inlet flue inevitably includes an inclined surface extending downward from the center toward the upstream side of the exhaust gas (an upwardly inclined surface inclined upward toward the downstream side). If scale is attached to such an upwardly inclined surface, this scale cannot be flushed into the absorption column from the downstream end of the inlet flue with cleaning water or the like.

Incidentally, the above inconvenience can be solved by forming the bottom surface of the inlet flue in the shape of a flat surface inclined downward toward the downstream side and connecting this flat inclined bottom surface to the lower edge of an exhaust gas inlet in the sidewall of the absorption column.

However, in the case where the sidewall of the absorption column is cylindrical, connecting the flat inclined bottom surface to the lower edge of the exhaust gas inlet requires the lower edge of the exhaust gas inlet to be formed in a curved shape bulging upward and also requires the downstream end of the inclined bottom surface to be formed in a curved shape corresponding to the lower edge of the exhaust gas inlet. This makes the formation of the exhaust gas inlet and the inclined bottom surface complicated.

In view of the above, an object of the present invention is to provide an exhaust gas inlet structure that can make the shape of the exhaust gas inlet of an absorption column easily formable and also suppress scaling on the bottom surface of the inlet flue.

### SOLUTION TO PROBLEM

To achieve the above object, a first aspect of the present invention provides an exhaust gas inlet structure of an absorption column that absorbs and removes a predetermined substance in an exhaust gas, an exhaust gas inlet being provided in a sidewall of the absorption column, an inlet flue being connected to the exhaust gas inlet. The exhaust gas from a combustion apparatus flows through the inlet flue and flows into the absorption column from the exhaust gas inlet.

A lower edge of the exhaust gas inlet extends and is curved substantially horizontally. A bottom surface of the inlet flue has a planar main bottom surface and a connection bottom surface connecting a downstream edge of the main bottom surface and the lower edge of the exhaust gas inlet. The downstream edge of the main bottom surface extends straight substantially horizontally at a position higher than the lower edge of the exhaust gas inlet. The connection bottom surface is formed to be segmented into a plurality of surfaces, and each of the plurality of surfaces is a downwardly inclined surface lower on the exhaust gas inlet side than on the main bottom surface side or a substantially horizontal flat surface.

In the above configuration, the connection bottom surface is formed to be segmented into a plurality of surfaces, and each of the plurality of surfaces is one of the downwardly inclined surface lower on the exhaust gas inlet side than on the main bottom surface side and inclined downward toward the downstream side of the exhaust gas or the substantially horizontal flat surface, and the connection bottom surface does not include an upwardly inclined surface higher on the exhaust gas inlet side (downstream side) than on the main bottom surface side (inclined upward toward the downstream side of the exhaust gas). In this way, the scale attached to the connection bottom surface can be flushed from the downstream end of the inlet flue into the absorption column with cleaning water or the like. The scaling on the bottom surface of the inlet flue can therefore be suppressed.

Since the lower edge of the exhaust gas inlet is set so as to extend and be curved substantially horizontally, the shape of the exhaust gas inlet is easily formable.

A second aspect of the present invention is the exhaust gas inlet structure, according to the first aspect, in which the plurality of surfaces include: a flat surface extending substantially horizontally from the lower edge of the exhaust gas inlet; a center downwardly inclined surface connecting the downstream edge of the main bottom surface and an upstream edge of the flat surface; and left and right downwardly inclined surfaces disposed on opposite sides of the center downwardly inclined surface and the flat surface.

In the above configuration, the plurality of surfaces are formed of the flat surface, the center downwardly inclined surface, and the left and right downwardly inclined surfaces. Accordingly, the number of surfaces forming the connection bottom surface can be kept small.

A third aspect of the present invention is the exhaust gas inlet structure, according to the second aspect, in which a downstream end of the inlet flue is reinforced by a columnar inner support standing so as to extend substantially vertically across an inside of the inlet flue. A lower portion of the inner support is supported on the flat surface.

In the above configuration, the lower portion of the inner support is supported by the substantially horizontal flat surface. Accordingly, the supported state of the inner support can be more stable than when the lower portion of the inner support is supported by an inclined surface. Moreover, it is possible to easily perform the work of mounting the inner support.

A fourth aspect of the present invention is the exhaust gas inlet structure, according to the first to third aspects, further comprising a cleaning water outflow part that causes cleaning water to flow out from a vicinity of the downstream edge of the main bottom surface.

With the above configuration, scale attached to the connection bottom surface can be flushed from the downstream end of the inlet flue into the absorption column with the cleaning water flowing out of the cleaning water outflow part.

### ADVANTAGEOUS EFFECT OF INVENTION

According to the present invention, it is possible to make the shape of the exhaust gas inlet of an absorption column easily formable and also suppress scaling on the bottom surface of the inlet flue.

### BRIEF DESCRIPTION OF DRAWINGS

[Fig. 1] Fig. 1 is a diagram schematically illustrating a configuration of a flue gas desulfurization apparatus according to an embodiment of the present invention.
[Fig. 2] Fig. 2 is a cross-sectional view as seen along arrows II-II in Fig. 1.
[Fig. 3] Fig. 3 is a cross-sectional view as seen along arrows III-III in Fig. 2.
[Fig. 4] Fig. 4 is a cross-sectional view as seen along arrows IV-IV in Fig. 2.
[Fig. 5] Fig. 5 is a perspective view of a connection bottom surface of an inlet flue as seen obliquely from above.

### DESCRIPTION OF EMBODIMENTS

A flue gas desulfurization apparatus according to the present invention will be described with reference to the drawings.

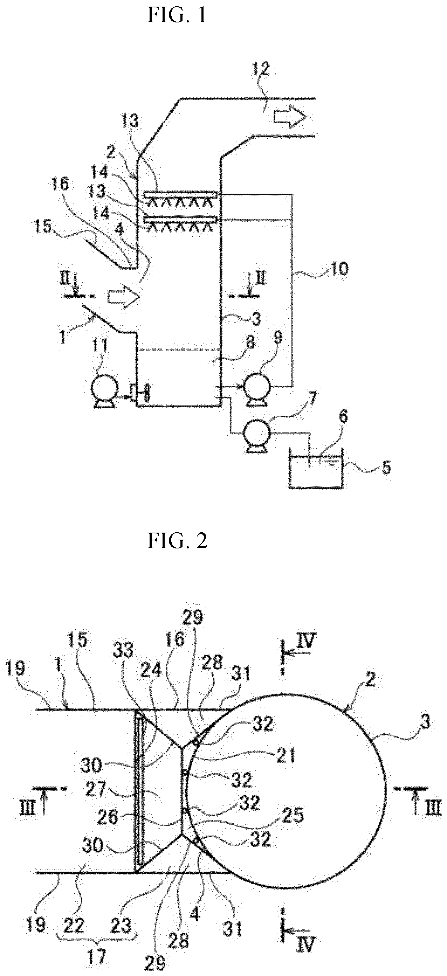

The flue gas desulfurization apparatus in this embodiment is a wet limestone-gypsum flue gas desulfurization apparatus that removes sulfur oxide in a combustion exhaust gas in order to prevent air pollution. In this desulfurization apparatus, as illustrated in Fig. 1, an exhaust gas from a combustion apparatus, such as a boiler, is introduced from an inlet flue 1 having the shape of a rectangular tube into an absorption column 2. An exhaust gas inlet 4 is provided in a cylindrical sidewall (peripheral wall) 3 of the absorption column 2, and the downstream end of the inlet flue 1 is connected to the exhaust gas inlet 4. Inside the absorption column 2, spray headers 13 are installed at a plurality of stages (two stages in the example of Fig. 1) in the gas flow direction, and each spray header 13 is provided with many spray nozzles 14 and sprays an absorption liquid from each spray nozzle 14. When the exhaust gas flowing through the absorption column 2 contacts droplets of the absorption liquid, the sulfur oxide in the exhaust gas is absorbed at the surfaces of the droplets along with soot and dust and acid gases such as hydrogen chloride (HCl) and hydrogen fluoride (HF) in the exhaust gas.

A limestone slurry tank 5 contains limestone slurry 6 as a sulfur oxide absorber, and this limestone slurry 6 is supplied to a liquid accumulation portion 8 at an inner lower section of the absorption column 2 by a limestone slurry pump 7 according to the amount of the sulfur oxide to be absorbed in the absorption column 2.

The absorption liquid in a slurry form in the liquid accumulation portion 8 inside the absorption column 2 is raised in pressure by an absorption liquid circulation pump 9 to thereby be supplied to the spray headers 13 through a circulation piping 10. As mentioned above, each spray header 13 is provided with many spray nozzles 14, and the absorption liquid is sprayed from the spray nozzles 14 and makes gas-liquid contact with the exhaust gas. By reacting with the water in the absorption liquid, the sulfur oxide in the exhaust gas becomes sulfurous acid, which is an intermediate product, and drops into the liquid accumulation portion 8 of the absorption column 2.

Air is supplied into the absorption liquid in the absorption column 2 by an oxidation air blower 11. The sulfurous acid in the liquid accumulation portion 8 is oxidized by the supplied air to thereby become sulfuric acid, and then reacts with a calcium compound in the absorption liquid to thereby become an end product (gypsum). The exhaust gas with its sulfur oxide having moved to the absorption liquid side rises inside the absorption column 2 and is discharged from an exhaust gas outlet 12.

The inlet flue 1 has an inclined portion 15 inclined downward toward the downstream side in the flow direction of the exhaust gas, and a connection portion 16 connecting the lower end of the inclined portion 15 and the exhaust gas inlet 4. As mentioned above, the inlet flue 1 is in the shape of a rectangular tube and, as illustrated in Figs. 2, 3 and 5, the gas flow path in the inlet flue 1 is defined by a bottom surface 17, a top surface 18, and left and right side surfaces 19.

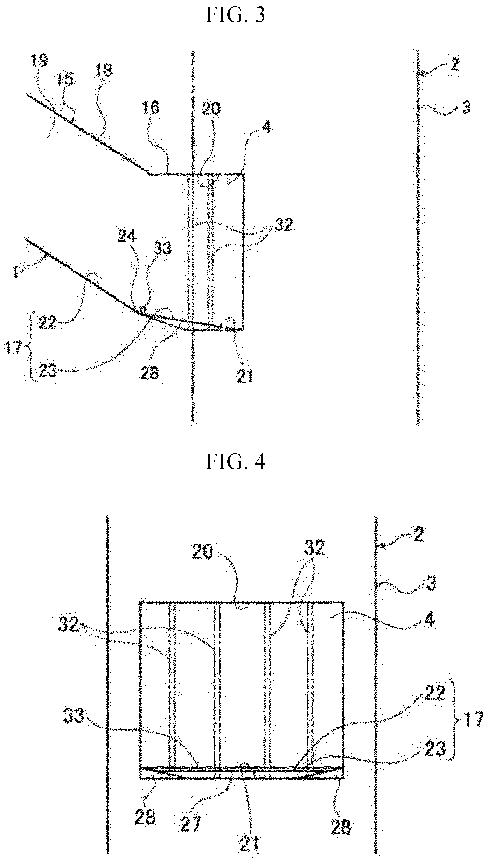

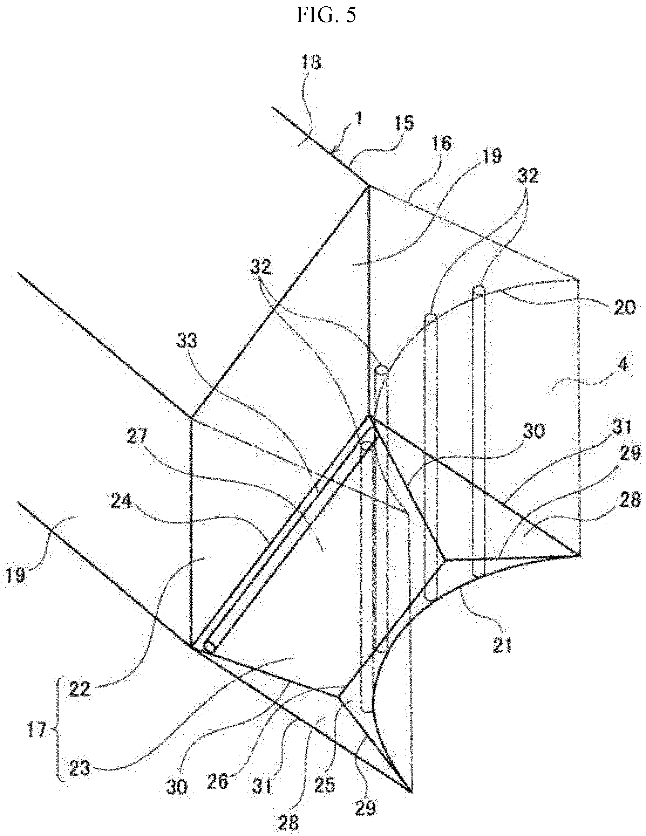

An upper edge 20 and a lower edge 21 of the opening of the exhaust gas inlet 4 are in the shape of arcs separated from and facing each other vertically and extending and curved substantially horizontally, and the exhaust gas inlet 4 appears rectangular when viewed from inside the absorption column 2 (see Figs. 4 and 5).

As illustrated Figs. 2 to 5, the bottom surface 17 of the inlet flue 1 has the bottom surface of the inclined portion 15 (main bottom surface 22) and the bottom surface of the connection portion 16 (connection bottom surface 23). The main bottom surface 22 is in a planar shape inclined downward toward the downstream side. The connection bottom surface 23 connects a downstream edge 24 of the main bottom surface 22 and the lower edge 21 of the exhaust gas inlet 4. The downstream edge 24 of the main bottom surface 22 extends straight substantially horizontally at a position higher than the lower edge 21 of the exhaust gas inlet 4.

The connection bottom surface 23 is formed to be segmented into a plurality of surfaces. In this embodiment, the plurality of surfaces are formed of: a flat surface 25 extending substantially horizontally from the lower edge 21 of the exhaust gas inlet 4; a center downwardly inclined surface 27 connecting the downstream edge 24 of the main bottom surface 22 and an upstream edge 26 of the flat surface 25; and left and right downwardly inclined surfaces 28 disposed on both the left and right sides of the center downwardly inclined surface 27 and the flat surface 25. The center downwardly inclined surface 27 is inclined downward toward the flat surface 25. The left and right downwardly inclined surfaces 28 are inclined downward toward the center downwardly inclined surface 27 and also inclined downward toward the flat surface 25. Specifically, the center downwardly inclined surface 27 and the left and right downwardly inclined surfaces 28 are each lower on the exhaust gas inlet 4 side than on the main bottom surface 22 side, and is inclined downward toward the downstream side of the exhaust gas.

The upstream edge 26 of the flat surface 25 extends straight substantially horizontally so as to be substantially in parallel to the downstream edge 24 of the main bottom surface 22 at a position obliquely below the downstream edge 24, and the length of the upstream edge 26 of the flat surface 25 is smaller than the length of the downstream edge 24 of the main bottom surface 22. The flat surface 25 is defined by the upstream edge 26, the lower edge 21 of the exhaust gas inlet 4, and left and right downstream boundary lines 29 respectively connecting the left and right ends of the upstream edge 26 and the left and right ends of the lower edge 21. The center downwardly inclined surface 27 is defined in a trapezoidal shape by the downstream edge 24 of the main bottom surface 22, the upstream edge 26 of the flat surface 25, and left and right upstream boundary lines 30 respectively connecting the left and right ends of the downstream edge 24 and the left and right ends of the upstream edge 26. The left and right downwardly inclined surfaces 28 are defined in triangular shapes by the left and right downstream boundary lines 29, the left and right upstream boundary lines 30, and lower edges 31 of the left and right side surfaces 19 of the connection portion 16.

The downstream end of the inlet flue 1 (connection portion 16) is reinforced by a plurality (four in this embodiment) of columnar inner supports 32 standing so as to extend substantially vertically across the inside of the inlet flue 1. A lower portion of each inner support 32 is supported on the flat surface 25 in the connection bottom surface 23, whereas an upper portion of each inner support 32 supports the top surface 18 of the connection portion 16.

At an upper end portion of the center downwardly inclined surface 27 (vicinity of the downstream edge 24 of the main bottom surface 22), a cleaning water outflow tube (cleaning water outflow part) 33 is disposed straight along the downstream edge 24 of the main bottom surface 22, cleaning water is ejected or jetted from a plurality of outflow portions (not illustrated) provided in the cleaning water outflow tube 33 to thereby flow out.

The absorption liquid supplied into the absorption column 2 enters the connection portion 16 of the inlet flue 1 when the exhaust gas is introduced from the inlet flue 1 into the absorption column 2. There is a possibility that the calcium compound in the absorption liquid having entered the connection portion 16 turns into gypsum scale by being attached to the connection bottom surface 23 and contacting the sulfur oxide in the exhaust gas. As a result of repeating a process in which the gypsum scale thus generated is dried by the exhaust gas and the absorption liquid is attached onto the dried gypsum scale again, scaling on the connection bottom surface 23 progresses. As the scaling progresses, the gypsum scale narrows the exhaust gas flow path in the inlet flue 1, which increases the pressure drop in the inlet flue 1 and increases the power of the fan for sending the exhaust gas from the inlet flue 1 into the absorption column 2.

According to this embodiment, the connection bottom surface 23 is formed to be segmented into a plurality of surfaces, and each of the plurality of surfaces is one of the downwardly inclined surface 27 or 28 being lower on the exhaust gas inlet 4 side than on the main bottom surface 22 side and inclined downward toward the downstream side of the exhaust gas or the substantially horizontal flat surface 25, and the connection bottom surface 23 does not include an upwardly inclined surface being higher on the exhaust gas inlet 4 side (downstream side) than on the main bottom surface 22 side (inclined upward toward the downstream side of the exhaust gas). Also, in the vicinity of the downstream edge 24 of the main bottom surface 22, the cleaning water outflow tube 33 is provided, which causes cleaning water to flow out.

In this way, the scale attached to the connection bottom surface 23 can be flushed from the exhaust gas inlet 4 at the downstream end of the inlet flue 1 into the absorption column 2 with the cleaning water from the cleaning water outflow tube 33. The scaling on the bottom surface 17 of the inlet flue 1 can therefore be suppressed.

Since the upper edge 20 and the lower edge 21 of the exhaust gas inlet 4 are set so as to extend and be curved substantially horizontally, the shape of the exhaust gas inlet 4 is easily formable.

Since the plurality of surfaces in the connection bottom surface 23 are formed of the flat surface 25, the center downwardly inclined surface 27, and the left and right downwardly inclined surfaces 28, the number of surfaces forming the connection bottom surface 23 can be kept small.

Also, since the lower portions of the inner supports 32 are supported by the substantially horizontal flat surface 25, the supported state of the inner supports 32 can be more stable than when the lower portions of the inner supports 32 are supported by an inclined surface. Moreover, it is possible to easily perform the work of mounting the inner supports 32.

Note that the present invention is not limited to the above embodiment described as an example and its modifications, and various changes can be made outside the above embodiment and the like according to the design and the like without departing from the technical idea of the present invention.

For example, in the above embodiment, the plurality of surfaces in the connection bottom surface 23 are formed of four surfaces of the flat surface 25, the center downwardly inclined surface 27, and the left and right downwardly inclined surfaces 28, but the number of surfaces forming the connection bottom surface 23 is not limited to four and may be five or more. For example, at least one surface among the flat surface 25, the center downwardly inclined surface 27, and the left and right downwardly inclined surfaces 28 may further be segmented to increase the number of surfaces forming the connection bottom surface 23.

Also, in the above embodiment, the method of supplying the absorption liquid into the absorption column 2 is not limited to the spray method with the spray nozzles 14 as in the above embodiment, and may be another method (e.g., a liquid column method in which the absorption liquid is jetted upward from a lower side in the form of a column to thereby generate a liquid column, and the exhaust gas is brought into contact with the generated liquid column).

### REFERENCE SIGNS LIST

- 1: inlet flue
- 2: absorption column
- 3: sidewall of absorption column
- 4: exhaust gas inlet
- 5: limestone slurry tank
- 6: limestone slurry
- 7: limestone slurry pump
- 8: liquid accumulation portion
- 9: absorption liquid circulation pump
- 10: circulation piping
- 11: oxidation air blower
- 12: exhaust gas outlet
- 13: spray header
- 14: spray nozzle
- 15: inclined portion of inlet flue
- 16: connection portion of inlet flue
- 17: bottom surface of inlet flue
- 18: top surface of inlet flue
- 19: left and right side surfaces of inlet flue
- 20: upper edge of exhaust gas inlet
- 21: lower edge of exhaust gas inlet
- 22: main bottom surface
- 23: connection bottom surface
- 24: downstream edge of main bottom surface
- 25: flat surface
- 26: upstream edge of flat surface
- 27: center downwardly inclined surface
- 28: left and right downwardly inclined surfaces
- 29: downstream boundary line
- 30: upstream boundary line
- 31: lower edges of left and right side surfaces of connection portion
- 32: inner support
- 33: cleaning water outflow tube (cleaning water outflow part)

## Claims

1. An exhaust gas inlet structure of an absorption column (2) which absorbs and removes a predetermined substance in an exhaust gas, is provided with an exhaust gas inlet (4) in a sidewall (3) of the absorption column (2), with an inlet flue being connected to the exhaust gas inlet (4), and allows the exhaust gas from a combustion apparatus to flow through the inlet flue and flow into the absorption column (2) from the exhaust gas inlet (4),
wherein a lower edge (21) of the exhaust gas inlet (4) extends and is curved substantially horizontally,
a bottom surface of the inlet flue (17) has a planar main bottom surface (22) and a connection bottom surface (23) connecting a downstream edge (24) of the main bottom surface (22) and the lower edge (21) of the exhaust gas inlet (4),
the downstream edge (24) of the main bottom surface (22) extends straight substantially horizontally at a position higher than the lower edge (21) of the exhaust gas inlet (4),
the connection bottom surface (23) is formed to be segmented into a plurality of surfaces, and
each of the plurality of surfaces is a downwardly inclined surface lower on the exhaust gas inlet (4) side than on the main bottom surface side or a substantially horizontal flat surface.

2. The exhaust gas inlet (4) structure of an absorption column (2) according to claim 1, wherein the plurality of surfaces include: a flat (25) surface extending substantially horizontally from the lower edge (21) of the exhaust gas inlet (4); a center downwardly inclined surface (27) connecting the downstream edge (24) of the main bottom surface (22) and an upstream edge of the flat surface (25); and left and right downwardly inclined surfaces (28) disposed on opposite sides of the center downwardly inclined surface and the flat surface.

3. The exhaust gas inlet structure of an absorption column (2) according to claim 2, wherein
a downstream end of the inlet flue is reinforced by a columnar inner support (32) standing so as to extend substantially vertically across an inside of the inlet flue, and
a lower portion of the inner support (32) is supported on the flat surface (25).

4. The exhaust gas inlet structure of an absorption column (2) according to any one of claims 1 to 3, further comprising a cleaning water outflow part (33) that causes cleaning water to flow out from a vicinity of the downstream edge of the main bottom surface.

## Patentansprüche

1. Abgaseinlassstruktur einer Absorptionskolonne (2), die eine vorbestimmte Substanz in bzw. aus einem Abgas absorbiert und entfernt, mit einem Abgaseinlass (4) in einer Seitenwand (3) der Absorptionskolonne (2) versehen ist, wobei ein Einlasskanal mit dem Abgaseinlass (4) verbunden ist, und es dem Abgas aus einer Verbrennungsvorrichtung ermöglicht, durch den Einlasskanal zu strömen und aus dem Abgaseinlass (4) in die Absorptionskolonne (2) zu strömen,
wobei sich eine untere Kante (21) des Abgaseinlasses (4) im Wesentlichen horizontal erstreckt und gekrümmt ist,
eine untere Fläche bzw. Oberfläche des Einlasskanals (17) eine planare Hauptbodenfläche bzw. -oberfläche (22) und eine Verbindungsbodenfläche bzw. -oberfläche (23) aufweist, die eine stromabwärtige Kante (24) der Hauptbodenfläche (22) und die untere Kante (21) des Abgaseinlasses (4) verbindet,
sich die stromabwärtige Kante (24) der Hauptbodenfläche (22) gerade im Wesentlichen horizontal an einer Position höher als die untere Kante (21) des Abgaseinlasses (4) erstreckt,
die Verbindungsbodenfläche (23) so gebildet ist, dass sie in eine Mehrzahl von Flächen bzw. Oberflächen segmentiert ist, und
jede der Mehrzahl von Flächen eine nach unten geneigte Fläche ist, die auf der Abgaseinlass(4)-Seite niedriger ist als auf der Hauptbodenflächenseite, oder eine im Wesentlichen horizontale flache Fläche ist.

2. Abgaseinlass(4)-Struktur einer Absorptionskolonne (2) nach Anspruch 1, wobei die Mehrzahl von Flächen beinhalten: eine flache (25) Fläche bzw. Oberfläche, die sich im Wesentlichen horizontal von der unteren Kante (21) des Abgaseinlasses (4) erstreckt; eine zentrale, nach unten geneigte Fläche bzw. Oberfläche (27), welche die stromabwärtige Kante (24) der Hauptbodenfläche (22) und eine stromaufwärtige Kante der flachen Fläche (25) verbindet; sowie linke und rechte nach unten geneigte Flächen bzw. Oberflächen (28), die auf gegenüberliegenden bzw. entgegengesetzten Seiten der zentralen, nach unten geneigten Fläche und der flachen Fläche angeordnet sind.

3. Abgaseinlassstruktur einer Absorptionskolonne (2) nach Anspruch 2, wobei
ein stromabwärtiges Ende des Einlasskanals durch einen säulenförmigen Innenträger (32) verstärkt ist, der so steht, dass er sich im Wesentlichen vertikal über eine Innenseite des Einlasskanals hinwegerstreckt, und
ein unterer Abschnitt des Innenträgers (32) auf der flachen Fläche (25) getragen ist.

4. Abgaseinlassstruktur einer Absorptionskolonne (2) nach einem der Ansprüche 1 bis 3, ferner umfassend einen Reinigungswasserabflussteil (33), der bewirkt, dass Reinigungswasser von einer Nähe der stromabwärtigen Kante der Hauptbodenfläche ausströmt.

## Revendications

1. Structure d'entrée de gaz d'échappement d'une colonne d'absorption (2) qui absorbe et élimine une substance prédéterminée dans des gaz d'échappement, est dotée d'une entrée de gaz d'échappement (4) dans une paroi latérale (3) de la colonne d'absorption (2), d'un conduit de fumée d'entrée qui est raccordé à l'entrée de gaz d'échappement (4), et permet aux gaz d'échappement d'un appareil de combustion de s'écouler à travers le conduit de fumée d'entrée et de s'écouler dans la colonne d'absorption (2) depuis l'entrée de gaz d'échappement (4),
dans laquelle un bord inférieur (21) de l'entrée de gaz d'échappement (4) s'étend et est incurvé de manière sensiblement horizontale,
une surface de fond du conduit de fumée d'entrée (17) a une surface de fond principale plane (22) et une surface de fond de raccordement (23) raccordant un bord aval (24) de la surface de fond principale (22) et le bord inférieur (21) de l'entrée de gaz d'échappement (4),
le bord aval (24) de la surface de fond principale (22) s'étend de manière rectiligne et sensiblement horizontale à une position plus élevée que le bord inférieur (21) de l'entrée de gaz d'échappement (4),
la surface de fond de raccordement (23) est formée pour être segmentée en une pluralité de surfaces, et
chacune de la pluralité de surfaces est une surface inclinée vers le bas plus basse sur le côté de l'entrée de gaz d'échappement (4) que sur le côté de la surface de fond principale ou une surface plate sensiblement horizontale.

2. Structure d'entrée de gaz d'échappement (4) d'une colonne d'absorption (2) selon la revendication 1, dans laquelle la pluralité de surfaces comporte : une surface plate (25) s'étendant sensiblement horizontalement à partir du bord inférieur (21) de l'entrée de gaz d'échappement (4) ; une surface centrale inclinée vers le bas (27) raccordant le bord aval (24) de la surface de fond principale (22) et un bord amont de la surface plate (25) ; et des surfaces gauche et droite inclinées vers le bas (28) disposées sur des côtés opposés de la surface centrale inclinée vers le bas et de la surface plate.

3. Structure d'entrée de gaz d'échappement d'une colonne d'absorption (2) selon la revendication 2, dans laquelle
une extrémité aval du conduit de fumée d'entrée est renforcée par un support interne en colonne (32) se tenant de manière à s'étendre sensiblement verticalement à travers un intérieur du conduit de fumée d'entrée, et
une portion inférieure du support interne (32) est supportée sur la surface plate (25).

4. Structure d'entrée de gaz d'échappement d'une colonne d'absorption (2) selon l'une quelconque des revendications 1 à 3, comprenant en outre une partie (33) de sortie d'eau de nettoyage qui amène de l'eau de nettoyage à s'écouler depuis un voisinage du bord aval de la surface de fond principale.
